(19) Europäisches Patentamt
European Patent Office
Office européen des brevets

(11) **EP 2 620 751 A1**

(12) **DEMANDE DE BREVET EUROPEEN**

(43) Date de publication:
**31.07.2013 Bulletin 2013/31**

(51) Int Cl.:
*G01D 3/036* (2006.01)   *G01L 9/00* (2006.01)

(21) Numéro de dépôt: **13152386.2**

(22) Date de dépôt: **23.01.2013**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **27.01.2012  FR 1250801**

(71) Demandeur: **Commissariat à l'Énergie Atomique
et aux Énergies Alternatives
75015 Paris (FR)**

(72) Inventeurs:
• **COLINET, Eric**
  **76230 BOIS GUILLAUME (FR)**
• **ARCAMONE, Julien**
  **38950 SAINT MARTIN LE VINOUX (FR)**
• **ARNDT, Grégory**
  **38240 Meylan (FR)**

(74) Mandataire: **Ilgart, Jean-Christophe et al
BREVALEX
95 rue d'Amsterdam
75378 Paris Cedex 8 (FR)**

(54) **Dispositif de mesure a capteurs résonants**

(57)   Dispositif de mesure (100) d'au moins une variable physique, comportant au moins :
- un premier et un deuxième capteurs résonants (102a, 102b), l'un des deux capteurs résonants (102b) étant sensible à une variation de la variable physique à mesurer et l'autre des deux capteurs résonants (102a) n'étant pas sensible à une variation de la variable physique à mesurer,
- des moyens (104) aptes à imposer au premier et au deuxième capteurs résonants une même fréquence de résonance,
- des moyens (108) de mesure d'un déphasage entre des signaux de sortie du premier et du deuxième capteurs résonants.

FIG.3

EP 2 620 751 A1

**Description**

**DOMAINE TECHNIQUE**

L'invention concerne le domaine des dispositifs de mesure à capteurs résonants, ou résonateurs, permettant de mesurer une ou plusieurs variables physiques, par exemple une masse, une accélération, une pression, une température, etc.

L'invention est avantageusement mise en oeuvre dans le domaine des capteurs chimiques phase gazeuse ou liquide, des capteurs de force moléculaire, de la spectroscopie de masse ou encore des capteurs inertiels (accéléromètres, gyroscopes). L'invention concerne également un procédé de mesure mis en oeuvre avec des capteurs résonants.

**ÉTAT DE LA TECHNIQUE ANTÉRIEURE**

Un résonateur de type MEMS et/ou NEMS est un dispositif électromécanique comportant une partie mobile formant une structure mécanique vibrante et deux éléments de transduction électromécanique. Un premier des deux éléments de transduction électromécanique génère une force sur la partie mobile, créant ainsi un déplacement de celle-ci, le deuxième élément de transduction électromécanique réalisant une détection du mouvement de la partie mobile. La transduction d'actionnement réalisée par le premier élément peut correspondre à un actionnement électrostatique, magnétique, thermomécanique ou encore piézoélectrique.

La transduction de détection réalisé peut correspondre par exemple à une détection capacitive, piézorésistive, magnétomotrice ou encore piézoélectrique.

Le capteur résonant est caractérisé notamment par sa fréquence de résonance $f_r$, qui dépend principalement de la masse de la partie mobile du capteur, des paramètres géométriques des parties mécaniques du capteur et des paramètres physiques des matériaux formant les différentes parties du capteur (module de Young, etc.), ainsi que par son facteur de qualité $Q$ dépendant des pertes énergétiques du capteur résonant. La fréquence de résonance $f_r$ dépend également de la température, de la pression, de la contrainte dans la structure mobile et de la tension d'alimentation appliquée sur le capteur résonant.

La dépendance de la fréquence de résonance $f_r$ d'un capteur résonant vis-à-vis de ces variables peut donc être utilisée pour réaliser une mesure d'une de ces variables physiques (par exemple une masse, une accélération, une température, etc.). Par exemple, dans le cas d'une mesure d'un ajout uniforme de masse sur le capteur résonant, cet ajout augmente la masse de la partie mobile du capteur, ce qui réduit sa fréquence de résonance $f_r$. La fréquence de résonance $f_r$ est mesurée dynamiquement en mettant initialement le capteur résonant en oscillation à cette fréquence de résonance $f_r$. La mesure de la variation de la fréquence de résonance $f_r$ du résonateur permet d'en déduire l'ajout de masse réalisé sur le capteur.

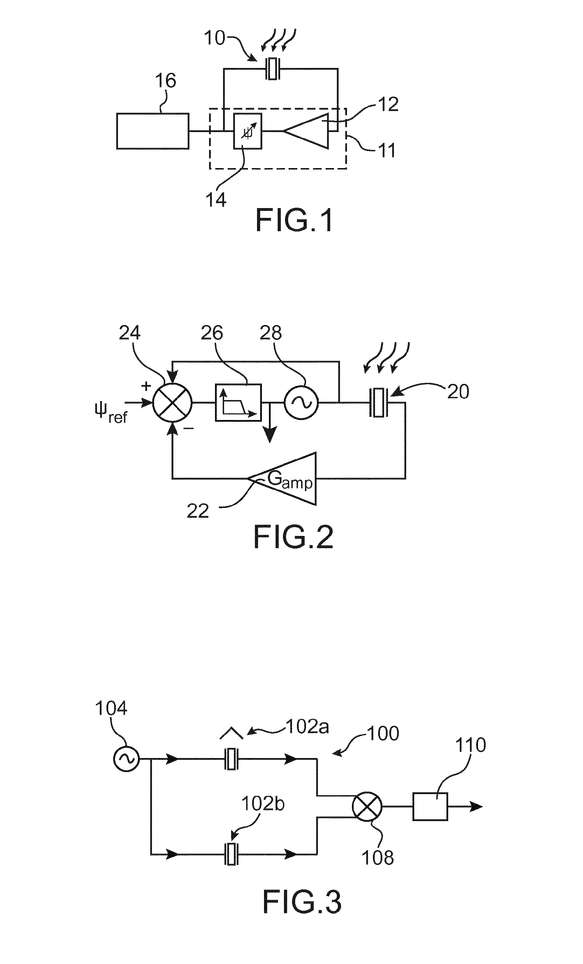

Un premier dispositif, appelé boucle auto-oscillante, permettant de mesurer la fréquence de résonance $f_r$ d'un capteur résonant 10 est représenté sur la figure 1. Cette boucle auto-oscillante comporte le capteur résonant 10, par exemple de type MEMS, une électronique de contre-réaction 11 composée d'un amplificateur 12 et d'un déphaseur 14, et un compteur de fréquence 16. L'électronique de contre-réaction 11 permet de compenser l'atténuation de gain (grâce à l'amplificateur 12) et le déphasage (grâce au déphaseur 14) introduits par le capteur résonant 10 dans la boucle à la fréquence de résonance $f_r$ afin que les conditions de résonance (gain supérieur à 1 et phase passant par la valeur -π/2) du capteur résonant 10 soient remplies. La fréquence de résonance $f_r$ du capteur résonant 10 est mesurée à l'aide du compteur de fréquence 16.

Un deuxième dispositif, appelé boucle à verrouillage de fréquence et représenté sur la figure 2, permet également de mesurer la fréquence de résonance $f_r$ d'un capteur résonant 20. Cette boucle à verrouillage de fréquence comporte le capteur résonant 20, par exemple similaire au capteur résonant 10, un amplificateur 22, un comparateur de phases 24, un filtre 26 et un oscillateur commandé en tension (VCO) 28 reliés en série dans une boucle. Le signal de sortie du VCO 28 est envoyé en entrée du capteur résonant 20 ainsi qu'en entrée du comparateur de phases 24. Dans un tel dispositif, le comparateur de phases 24, le filtre 26 et le VCO 28 permettent d'asservir le déphasage du capteur résonant 20 sur son déphasage à la fréquence de résonance $f_r$. La fréquence de résonance $f_r$ est mesurée en sortie du filtre 26, par exemple par un compteur de fréquence non représenté sur la figure 2.

Les dispositifs précédemment décrits permettent d'obtenir une mesure d'une variation d'une variable physique via la mesure de la variation de la fréquence de résonance d'un capteur résonant.

Toutefois, avec de tels dispositifs, il est difficile d'isoler l'influence de la variable physique à mesurer (par exemple la masse ajoutée) sur la variation de la fréquence de résonance mesurée par rapport à celle des autres variables physiques (par exemple la température, la pression, ...). En effet, la fréquence de résonance $f_r$ d'un résonateur peut être exprimée sous la forme de l'équation suivante :

$$f_r = f_{r0}\left(1 + \alpha\Delta T + \beta\Delta m + \gamma\Delta V_{DC}\right) \qquad (1)$$

avec $f_{r0}$ : fréquence de résonance du capteur résonant dans ses conditions normales de fonctionnement,
$\Delta T$ : variation de température subie par le capteur résonant,
$\Delta m$ : variation de masse subie par le capteur résonant,
$\Delta V_{DC}$ : variation de la tension d'alimentation du capteur résonant.

Les valeurs des coefficients $\alpha$, $\beta$ et $\gamma$ sont fonction de l'influence de ces paramètres sur la fréquence de résonance $f_r$. L'équation (1) ci-dessus est une expression simplifiée de la fréquence de résonance $f_r$ qui ne prend en compte que certains des paramètres ayant une influence sur la fréquence de résonance $f_r$ du capteur résonant.

La variation des conditions de fonctionnement environnementales du capteur résonant modifie la valeur de la fréquence de résonance $f_r$ du capteur. Par exemple, si l'on souhaite mesurer la variation de masse $\Delta m$ subie par le capteur résonant, l'équation (1) montre qu'une variation de température simultanée se produisant en même temps que la variation de masse à mesurer peut fausser cette mesure du fait qu'il n'est pas possible de distinguer l'influence de la variation du paramètre à mesurer sur la fréquence de résonance du capteur résonant par rapport aux éventuelles variations des autres paramètres ayant également une influence sur la fréquence de résonance $f_r$ du capteur.

Pour pallier ce problème, une solution consiste à faire appel à deux oscillateurs (correspondant par exemple à deux structures similaires à l'une de celles représentées sur les figures 1 et 2) comprenant chacun un capteur résonant distinct de même fréquence de résonance $f_{r0}$ dans les mêmes conditions standards de fonctionnement. L'un de ces deux capteurs résonants est modifié afin qu'il soit insensible à la variation de la variable physique à mesurer. Par exemple, dans le cas d'une mesure de variation de masse, l'un des deux capteurs peut être recouvert d'un capot apte à supporter la masse à mesurer sans la répercuter sur le capteur résonant. Ce capteur résonant est donc sensible à toutes les variables physiques (par exemple la température, la pression, ...) hormis la variable à mesurer, ici la masse. En reprenant l'expression simplifiée de la fréquence de résonance $f_r$ donnée par l'équation (1) précédente, la fréquence de résonance $f_{r1}$ du capteur résonant insensible à une variation de masse est donc telle que :

$$f_{r1} = f_{r0}\left(1 + \alpha\Delta T + \gamma\Delta V_{DC}\right) \qquad (2)$$

Contrairement à ce capteur résonant, l'autre capteur est sensible à toutes les variables physiques ayant une influence sur sa fréquence de résonance, y compris la variable à mesurer. Sa fréquence de résonance $f_{r2}$ est donc telle que :

$$f_{r2} = f_{r0}\left(1 + \alpha\Delta T + \beta\Delta m + \gamma\Delta V_{DC}\right) \qquad (3)$$

Les fréquences de résonance $f_{r1}$ et $f_{r2}$ de chacun des capteurs résonants sont mesurées lors de la variation de variable à déterminer. La variation relative des fréquences de résonance des deux capteurs résonants permet donc de déterminer la variation de la variable recherchée telle que :

$$f_{r2} - f_{r1} = f_{r0}\beta\Delta m \qquad (4)$$

Bien qu'efficace pour obtenir la mesure recherchée, cette solution nécessite de réaliser deux oscillateurs comprenant chacun un compteur de fréquence, ce qui représente un coût de réalisation important.

EXPOSÉ DE L'INVENTION

Un but de la présente invention est de proposer un dispositif de mesure à capteurs résonants permettant de mesurer la variation d'au moins une variable physique, par exemple une variation de masse, de température, de pression ou encore une accélération, ne nécessitant pas la réalisation de deux compteurs de fréquence distincts.

Pour cela, il est proposé un dispositif de mesure d'au moins une variable physique, comportant au moins :

- un premier et un deuxième capteurs résonants, l'un des deux capteurs résonants étant sensible à une variation de la variable physique à mesurer et l'autre des deux capteurs résonants n'étant pas sensible à une variation de la variable physique à mesurer,

- des moyens aptes à imposer au premier et au deuxième capteurs résonants une même fréquence de résonance,
- des moyens de mesure d'un déphasage entre des signaux de sortie du premier et du deuxième capteurs résonants.

La présente invention propose en outre un dispositif de mesure d'au moins une variable physique, comportant au moins :

- un premier et un deuxième capteurs résonants, l'un des deux capteurs résonants étant sensible à une variation de la variable physique à mesurer et l'autre des deux capteurs résonants n'étant pas sensible à une variation de la variable physique à mesurer,
- des moyens aptes à imposer au premier et au deuxième capteurs résonants une même fréquence de résonance,
- des moyens de mesure d'un déphasage entre des signaux de sortie du premier et du deuxième capteurs résonants, dans lequel les moyens aptes à imposer au premier et au deuxième capteurs résonants une même fréquence de résonance comportent au moins :
- deux amplificateurs dont des entrées sont reliées à des sorties du premier et du deuxième capteurs résonants, et
- un circuit déphaseur dont une entrée est reliée à une sortie d'un des deux amplificateurs et dont une sortie est reliée à des entrées du premier et du deuxième capteurs résonants,
  ou dans lequel les moyens aptes à imposer au premier et au deuxième capteurs résonants une même fréquence de résonance comportent au moins :
- un amplificateur différentiel comportant une entrée non inverseuse reliée à une sortie du premier capteur résonant, une entrée inverseuse reliée à une sortie du deuxième capteur résonant, une sortie inverseuse reliée à une entrée du premier capteur résonant, et une sortie non inverseuse reliée à une entrée du deuxième capteur résonant, et
- une première capacité reliée à la sortie inverseuse de l'amplificateur différentiel, et une deuxième capacité reliée à la sortie non inverseuse de l'amplificateur différentiel,
  et, lorsque les moyens aptes à imposer au premier et au deuxième capteurs résonants une même fréquence de résonance comportent lesdits deux amplificateurs et ledit circuit déphaseur, les moyens de mesure du déphasage entre les signaux de sortie du premier et du deuxième capteurs résonants sont aptes à mesurer un déphasage entre des signaux délivrés sur les sorties des deux amplificateurs.

Ainsi, la mesure de la variable physique est obtenue à partir de la mesure du déphasage entre les signaux de sortie délivrés par les capteurs résonants, et non à partir d'un calcul réalisé via des mesures individuelles des fréquences de résonance des deux capteurs résonants. Le dispositif selon l'invention assure donc une détection harmonique différentielle de résonance ne requérant pas de mesure directe de fréquence.

En réalisant directement la mesure du déphasage des signaux de sortie des capteurs résonants, l'invention permet donc de limiter l'influence des paramètres environnementaux non désirés sur la mesure réalisée, et cela sans faire appel à des compteurs de fréquence.

Ledit autre des deux capteurs résonants peut comporter des moyens apte à rendre la structure résonante dudit capteur insensible à une variation de la variable physique à mesurer.

L'invention s'applique avantageusement pour réaliser une mesure d'une concentration de gaz, tel que du DMMP (dimethyl methylphosphonate) où une couche sensible de gaz est déposée sur l'un des capteurs résonants et pas sur l'autre.

Le premier et/ou le deuxième capteurs résonants peuvent être de type NEMS et/ou MEMS. Le premier et/ou le deuxième capteurs résonants peuvent comporter chacun au moins une partie mobile formant une structure mécanique vibrante et au moins deux éléments de transduction électromécanique, l'un des deux éléments étant apte faire vibrer ladite structure mécanique vibrante en fonction d'un signal d'entrée appliqué sur le capteur, et l'autre des deux éléments étant apte à générer un signal de sortie en fonction de la vibration de la structure mécanique. Toutefois, les capteurs résonants du dispositif de mesure selon l'invention peuvent se baser sur n'importe quel type d'actionnement et de détection.

La variable physique destinée à être mesurée peut correspondre à une masse, une température, une accélération ou une pression.

Dans un premier mode de réalisation, les moyens aptes à imposer au premier et au deuxième capteurs résonants une même fréquence de résonance peuvent comporter au moins un générateur de signaux périodiques relié à des entrées du premier et du deuxième capteurs résonants.

Dans un autre mode de réalisation, les moyens aptes à imposer au premier et au deuxième capteurs résonants une même fréquence de résonance peuvent comporter au moins :

- deux amplificateurs dont des entrées sont reliées à des sorties du premier et du deuxième capteurs résonants,

- un circuit déphaseur dont une entrée est reliée à une sortie d'un des deux amplificateurs et dont une sortie est reliée à des entrées du premier et du deuxième capteurs résonants,

et dans lequel les moyens de mesure du déphasage entre les signaux de sortie du premier et du deuxième capteurs résonants sont aptes à mesurer un déphasage entre des signaux délivrés sur les sorties des deux amplificateurs.

Le dispositif de mesure peut comporter en outre des moyens de calcul d'une variation de ladite variable physique à partir du déphasage mesuré.

Dans un autre mode de réalisation, les moyens aptes à imposer au premier et au deuxième capteurs résonants une même fréquence de résonance peuvent comporter au moins :

- un amplificateur différentiel comportant une entrée non inverseuse reliée à une sortie du premier capteur résonant, une entrée inverseuse reliée à une sortie du deuxième capteur résonant, une sortie inverseuse reliée à une entrée du premier capteur résonant, et une sortie non inverseuse reliée à une entrée du deuxième capteur résonant,
- une première capacité reliée à la sortie inverseuse de l'amplificateur différentiel, et une deuxième capacité reliée à la sortie non inverseuse de l'amplificateur différentiel.

Le dispositif peut comporter en outre des moyens de calcul d'une variation de la variable physique à partir d'une différence entre les valeurs de tensions d'alimentation des capteurs résonants.

Le dispositif peut comporter en outre des moyens aptes à alimenter électriquement l'un des deux capteurs résonants par un signal d'alimentation dont la valeur est fonction de la valeur d'un signal d'alimentation de l'autre des deux capteurs résonants et du déphasage entre les signaux de sortie du premier et du deuxième capteurs résonants.

Les moyens de mesure du déphasage entre les signaux de sortie du premier et du deuxième capteurs résonants peuvent comporter au moins un comparateur de phases.

Il est également proposé un procédé de mesure d'au moins une variable physique, comportant au moins les étapes de :

- mise en oscillation, à une même fréquence de résonance, d'un premier et d'un deuxième capteurs résonants, l'un des deux capteurs résonants étant sensible à une variation de la variable physique à mesurer et l'autre des deux capteurs résonants n'étant pas sensible à la variation de la variable physique à mesurer,
- mesure d'un déphasage entre des signaux de sortie du premier et du deuxième capteurs résonants.

L'invention concerne en outre un procédé de mesure d'une variation d'au moins une variable physique, comportant au moins les étapes de :

- mise en oscillation, à une même fréquence de résonance, d'un premier et d'un deuxième capteurs résonants, l'un des deux capteurs résonants étant sensible à une variation de la variable physique à mesurer et l'autre des deux capteurs résonants n'étant pas sensible à une variation de la variable physique à mesurer,
- mesure d'un déphasage entre des signaux de sortie du premier et du deuxième capteurs résonants, et dans lequel la mise en oscillation, à une même fréquence de résonance, du premier et du deuxième capteurs résonants est obtenue :

  - en appliquant en entrée du premier et du deuxième capteurs résonants un même signal délivré par une boucle de contre-réaction réalisée avec le premier ou le deuxième capteur résonant, ou
  - en appliquant en entrée de chacun du premier et du deuxième capteur résonant un signal délivré par une boucle de contre-réaction réalisée avec chacun du premier et du deuxième capteur résonant respectivement et un amplificateur différentiel recevant en entrée les signaux de sortie du premier et du deuxième capteurs résonants.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- les figures 1 et 2 représentent deux dispositifs de mesure à capteur résonant de l'art antérieur,
- les figures 3 à 6 représentent des dispositifs de mesure à capteurs résonants, objets de la présente invention, selon différents modes de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

On se réfère tout d'abord à la figure 3 qui représente un dispositif de mesure 100 à capteurs résonants apte à réaliser la mesure d'une variable physique, selon un premier mode de réalisation.

Le dispositif de mesure 100 comporte un premier capteur résonant 102a, également appelé résonateur, par exemple de type MEMS et/ou NEMS, et un deuxième résonateur 102b, également de type MEMS et/ou NEMS. Ces deux capteurs résonants 102a, 102b sont par exemple similaires, c'est-à-dire présentent notamment une même fréquence de résonance $f_r$. Chacun des capteurs résonants peut comporter au moins une partie mobile formant une structure mécanique vibrante et au moins deux éléments de transduction, par exemple électromécanique, l'un des deux éléments formant un élément de transduction d'entrée apte faire vibrer la structure mécanique vibrante en fonction d'un signal d'entrée appliqué sur l'élément d'entrée du capteur, et l'autre des deux éléments formant un élément de transduction de sortie apte à générer un signal de sortie en fonction de la vibration mesurée de la structure mécanique vibrante.

Par rapport au deuxième capteur résonant 102b qui est sensible aux variations de toutes les variables physiques environnantes du résonateur et qui ont une influence sur sa fréquence de résonance (par exemple la masse, la température, etc.), le premier capteur résonant 102a est insensible aux variations de la variable physique destinée à être mesurée par le dispositif de mesure 100. Dans l'exemple décrit ici, le dispositif de mesure 100 est destiné à réaliser la mesure d'une masse appliquée sur celui-ci. Ainsi, le premier capteur résonant 102a comporte des moyens aptes à le rendre insensible aux variations de masse subies, ces moyens correspondant par exemple à un capot ou un boitier dans lequel est disposée au moins la structure mécanique résonante du premier capteur résonant 102a.

Une masse appliquée sur le premier capteur résonant 102a exerce ainsi une force sur le capot ou le boitier qui n'est pas retransmise à la structure résonante du premier capteur résonant 102a, ne modifiant donc pas la fréquence de résonance du premier capteur résonant 102a. Si le dispositif de mesure 100 était destiné à réaliser la mesure d'une variation de température, la structure mécanique résonante du premier capteur résonant 102a pourrait être par exemple protégée par un écran thermique permettant à sa structure mécanique résonante de ne pas subir cette variation de température.

Les entrées des deux capteurs résonants 102a, 102b sont reliées à un générateur de signaux périodiques 104 appliquant en entrée des capteurs résonants 102a, 102b un signal d'oscillation dont les caractéristiques (fréquence, amplitude) sont telles que les deux capteurs résonants 102a, 102b sont en résonance à une même fréquence imposée par le générateur de signaux 104. De plus, les deux capteurs résonants 102a, 102b peuvent être alimentés à partir d'une même tension d'alimentation.

Le dispositif de mesure 100 comporte en outre un comparateur de phases 108 permettant de mesurer le déphasage entre des signaux délivrés en sortie des capteurs résonants 102a, 102b. Ainsi, lorsque le dispositif de mesure 100 est soumis à une variation de la variable à mesurer (par exemple une variation de masse appliquée sur le dispositif de mesure 100), cette variation entraîne un déphasage du signal de sortie délivré par le deuxième capteur résonant 102b par rapport au signal de sortie délivré par le premier capteur résonant 102a qui n'est pas impacté par cette variation de la variable à mesurer.

Or, ce déphasage est représentatif de la variation de la variable mesurée. Par exemple, dans le cas du dispositif 100 destiné à mesurer une masse, le déphasage $\Delta\varphi$ entre les signaux de sortie des capteurs résonants 102a, 102b est tel que :

$$\Delta\varphi = -arctan\left(\frac{\dfrac{f}{f_r.Q}}{1-\left(\dfrac{f}{f_r}\right)^2}\right) \qquad (5)$$

avec $f$ : fréquence du signal délivré par le générateur de signaux 104,
$f_r$ : fréquence de résonance des capteurs résonants 102a, 102b,
$Q$ : facteur de qualité des capteurs résonants 102a, 102b.

Or, la fréquence de résonance $f_r$ est telle que :

$$f_r = \sqrt{\frac{k}{m}} \cdot \frac{1}{2\pi} \qquad\qquad (6)$$

avec m correspondant à la somme de la masse initiale $m_0$ de la structure mobile du capteur et de la variation de masse $\Delta$m à mesurer,

k : raideur de la structure mobile du capteur résonant.

A partir des formules (5) et (6) ci-dessus, on voit donc qu'il est possible de retrouver la valeur d'une variation $\Delta m$ de la masse initiale $m_0$ (avec m = $m_0$ + $\Delta m$) à partir du déphasage mesuré $\Delta\varphi$.

Le signal de sortie du comparateur de phases 108 est envoyé à l'entrée de moyens de calcul 110, comportant par exemple un circuit électronique de calcul, aptes à calculer la valeur de la variation du paramètre physique recherchée à partir du déphasage mesuré entre les signaux de sortie des capteurs résonants 102a, 102b.

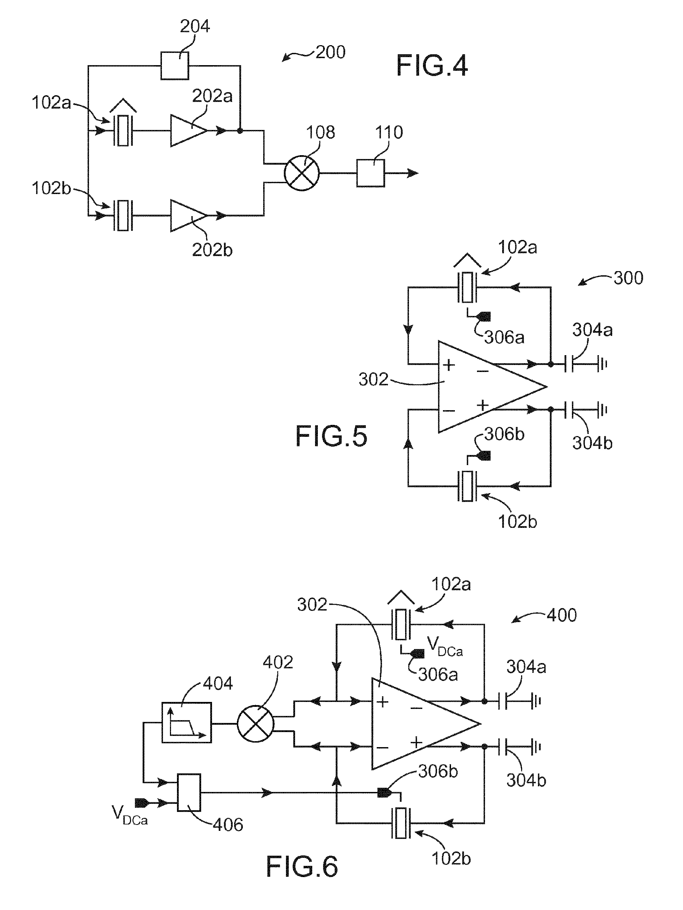

On se réfère maintenant à la figure 4 qui représente un deuxième exemple de réalisation d'un dispositif de mesure 200 à capteurs résonants apte à réaliser la mesure d'une variable physique.

Le dispositif de mesure 200 comporte un premier capteur résonant 102a et un deuxième capteur résonant 102b, par exemple similaires à ceux précédemment décrits en liaison avec le dispositif de mesure 100.

Contrairement au dispositif de mesure 100 dans lequel les fréquences d'oscillation des capteurs résonants 102a, 102b sont imposées par le générateur de signaux 104, les capteurs résonants 102a, 102b du dispositif de mesure 200 reçoivent en entrée un même signal délivré par une boucle de contre-réaction réalisée avec l'un des capteurs résonants 102a, 102b.

Ainsi, sur l'exemple de la figure 4, les sorties des résonateurs 102a, 102b sont reliées chacune à l'entrée d'un amplificateur 202a, 202b. Les amplificateurs 202a, 202b sont de préférence de gain identique afin de ne pas introduire de déphasages différents dans le dispositif de mesure 200, et d'avoir des signaux de même amplitude en entrées des résonateurs, ce qui empêche l'apparition de phénomènes non-linéaires et ne perturbe pas la mesure réalisée. La sortie de l'amplificateur 202a est envoyée en entrée d'un circuit déphaseur 204 dont la sortie est reliée aux entrées des deux capteurs résonants 102a, 102b.

Ainsi, le premier capteur résonant 102a fait partie d'une boucle auto-oscillante permettant de délivrer un signal périodique, évitant ainsi l'utilisation d'un générateur de signaux. Dans l'exemple décrit ici, la boucle auto-oscillante est formée avec le premier capteur résonant 102a insensible aux variations de la variable physique à mesurer.

Toutefois, il est possible de réaliser la boucle auto-oscillante du dispositif de mesure 200 avec le deuxième capteur résonant 102b sensible aux variations de la variable physique à mesurer.

Les signaux de sortie des deux amplificateurs 202a, 202b sont envoyés sur les entrées d'un comparateur de phases 108, par exemple similaire à celui du dispositif de mesure 100, permettant de mesurer le déphasage des signaux de sortie des amplificateurs 202a, 202b l'un par rapport à l'autre, ce déphasage étant similaire à celui obtenu entre les signaux délivrés en sortie des capteurs résonants 102a, 102b. Comme pour le dispositif de mesure 100, la mesure de ce déphasage est ensuite envoyée en entrée de moyens de calcul 110 aptes à calculer la valeur du paramètre physique mesuré à partir du déphasage obtenu.

On se réfère à la figure 5 qui représente un troisième exemple de réalisation d'un dispositif de mesure 300 à capteurs résonants apte à réaliser la mesure d'une variable physique.

Le dispositif de mesure 300 comporte un premier capteur résonant 102a et un deuxième capteur résonant 102b, par exemple similaires à ceux précédemment décrits en liaison avec les dispositifs de mesure 100 et 200.

Contrairement au dispositif de mesure 100 dans lequel les fréquences d'oscillation des capteurs résonants sont imposées par le générateur de signaux 104, les capteurs résonants 102a, 102b du dispositif de mesure 300 sont alimentés par une contre-réaction réalisée avec chacun des capteurs résonants.

Ces contre-réactions sont réalisées via un amplificateur différentiel 302. La sortie du premier capteur résonant 102a est reliée à l'entrée non inverseuse, ou entrée positive, de l'amplificateur différentiel 302 et la sortie du deuxième capteur résonant 102b est reliée à l'entrée inverseuse, ou entrée négative, de l'amplificateur différentiel 302.

La sortie non-inverseuse de l'amplificateur différentiel 302 est reliée à l'entrée du deuxième capteur résonant 102b et la sortie inverseuse de l'amplificateur différentiel 302 (dont la valeur est égale à l'inverse de celle de la sortie non-inverseuse, les sorties inverseuse et non-inverseuse de l'amplificateur différentiel 302 présentant donc un déphasage de n l'une par rapport à l'autre) est reliée à l'entrée du premier capteur résonant 102a.

Une capacité 304a, 304b est reliée à chacune des liaisons électriques reliant l'une des sorties de l'amplificateur différentiel 302 à l'entrée d'un des capteurs résonants 102a, 102b, et la masse. Ces capacités 304a, 304b introduisent un déphasage de -$\pi$/2 dans les boucles de rétroaction, équilibrant ainsi les déphasages subis par les signaux à travers les boucles de contre-réaction (chaque résonateur introduit également un déphasage de -n/2). En variante, il est possible d'inverser les positions des capteurs résonants 102a, 102b, l'entrée non inverseuse et la sortie inverseuse de l'amplificateur différentiel 302 étant reliées au deuxième capteur résonant 102b, l'entrée inverseuse et la sortie non inverseuse de l'amplificateur différentiel 302 étant reliées au premier capteur résonant 102a.

Les capteurs résonants 102a et 102b du dispositif de mesure 300 sont tels qu'ils présentent une même fréquence de résonance dans les conditions de fonctionnement standards, c'est-à-dire lorsqu'ils ne sont pas soumis à une variation de la variable physique destinée à être mesurée par le dispositif 300. Lorsque le dispositif de mesure 300 (et donc les résonateurs 102a, 102b) est soumis à une variation de la variable à mesurer, les tension d'alimentation des résonateurs 102a, 102b appliquées sur les bornes d'alimentation 306a, 306b des capteurs 102a, 102b doivent être différentes pour maintenir les deux capteurs résonants 102a, 102b à une même fréquence de résonance, et conserver un déphasage constant (ici n) entre les signaux de sortie délivrés par les deux capteurs résonants 102a, 102b, du fait que seul le deuxième capteur résonant 102b est soumis cette variation. En exprimant les fréquences de résonances des capteurs résonants 102a, 102b conformément à l'équation (1) exposée précédemment, on a donc :

$$f_{r1} = f_{r0}\left(1 - \alpha\Delta T - \gamma\Delta V_{DC1}\right) \qquad (7)$$

$$f_{r2} = f_{r0}\left(1 - \alpha\Delta T - \beta\Delta m - \gamma\Delta V_{DC2}\right) \qquad (8)$$

Avec $f_{r1}$ et $f_{r2}$ correspondant respectivement aux fréquences de résonance du premier et du deuxième capteurs résonants 102a, 102b, $V_{DC1}$ et $V_{DC2}$ correspondant respectivement aux tensions d'alimentation du premier et du deuxième capteurs résonants 102a, 102b. A partir des équations (7) et (8) ci-dessus, du fait que les fréquences de résonances $f_{r1}$ et $f_{r2}$ sont égales, on voit donc que la mesure de la variable physique (ici la variation de la masse $\Delta m$) peut être obtenue via la mesure de la différence entre les tensions d'alimentation $V_{DC2}$ et $V_{DC1}$ permettant de conserver un déphasage constant entre les signaux de sortie des deux capteurs résonants 102a, 102b telle que :

$$\gamma\left(\Delta V_{DC2} - \Delta V_{DC1}\right) = \beta\Delta m \qquad (9)$$

Etant donné que les valeurs des coefficients $\gamma$ et $\beta$ sont connues, on peut donc déterminer la valeur de $\Delta m$. Les moyens de mesure des tensions d'alimentation $V_{DC2}$ et $V_{DC1}$ ne sont pas représentés sur la figure 5.

En variante du schéma représenté sur la figure 5, il est possible de relier les sorties des capteurs résonants 102a, 102b en entrée d'un comparateur de phases, par exemple similaire au comparateur de phases 108 précédemment décrit. La valeur du signal de sortie délivré par le comparateur de phases peut alors être conservée constante par l'opérateur en ajustant l'une des tensions d'alimentation des capteurs résonants 102a, 102b. La valeur de la variation de masse recherchée est alors obtenue de manière analogue via la mesure de la différence entre $V_{DC1}$ et $V_{DC2}$.

Dans une autre variante, il est possible de ne pas ajuster les tensions d'alimentation des capteurs résonants 102a, 102b lors d'une variation de la variable physique à mesurer. Dans ce cas, les sorties des capteurs résonants 102a, 102b sont reliées à des entrées de moyens de mesure du déphasage entre les signaux de sorties des capteurs résonants 102a, 102b, correspondant par exemple à un comparateur de phases similaire au comparateur de phases 108 précédemment décrit. La sortie du comparateur de phases 108 est alors envoyée en entrée de moyens de calcul, correspondant par exemple aux moyens 110 précédemment décrits, aptes à calculer une variation de la variable physique recherchée à partir du déphasage mesuré.

Lorsque les fréquences de résonance des deux capteurs résonants 102a, 102b sont différentes dans les mêmes conditions de fonctionnement du dispositif 300, les capteurs résonants 102a, 102b fonctionnent alors à une même fréquence d'oscillation comprise entre les deux fréquences de résonance des deux capteurs résonants 102a, 102b, ou en dehors de cette gamme, à une fréquence proche de l'une de ces deux fréquences de résonance.

Lorsque l'écart entre les fréquences de résonance des deux capteurs résonants est plus important au point qu'il n'y a pas d'oscillations créées dans le dispositif 300, il est possible de réaliser le dispositif de mesure 400 représenté sur la figure 6. Par rapport au dispositif 300 représenté sur la figure 5, le dispositif de mesure 400 comporte en outre un comparateur de phases 402 dont les entrées sont reliées aux sorties des deux capteurs résonants 102a, 102b. La sortie du comparateur de phases 402 est reliée à l'entrée d'un filtre passe-bas 404, puis à une entrée d'un additionneur 406. La tension d'alimentation $V_{DC1}$ du premier capteur résonant 102 est appliquée sur une deuxième entrée de l'additionneur 406. Enfin, la sortie de l'additionneur 406 est reliée à la borne d'alimentation 306b du deuxième capteur résonant 102b.

Les éléments 402, 404 et 406 permettent d'asservir la tension d'alimentation du deuxième capteur résonant 102b par rapport au déphasage entre les signaux délivrés en sortie des deux capteurs résonants 102a, 102b. Ainsi, la fréquence de résonance du deuxième capteur résonant 102b est asservie sur celle du premier capteur résonant 102a afin que lors de la mesure réalisée par le dispositif 400, les fréquences de résonances des deux capteurs résonants soient identiques. Les équations (7), (8) et (9) exposées ci-dessus s'appliquent alors au dispositif 400, la mesure de la variable recherchée étant déduite de la différence entre les tensions d'alimentation $V_{DC1}$ et $V_{DC2}$ des deux capteurs résonants 102a, 102b permettant de maintenir les deux capteurs résonants 102a, 102b en vibration à une même fréquence de résonance.

## Revendications

1. Dispositif de mesure (200 - 400) d'au moins une variable physique, comportant au moins :

    - un premier et un deuxième capteurs résonants (102a, 102b), l'un des deux capteurs résonants (102b) étant sensible à une variation de la variable physique à mesurer et l'autre des deux capteurs résonants (102a) n'étant pas sensible à une variation de la variable physique à mesurer,
    - des moyens (202a, 202b, 204, 302, 402, 404, 406) aptes à imposer au premier et au deuxième capteurs résonants (102a, 102b) une même fréquence de résonance,
    - des moyens (108) de mesure d'un déphasage entre des signaux de sortie du premier et du deuxième capteurs résonants (102a, 102b),
    dans lequel les moyens aptes à imposer au premier et au deuxième capteurs résonants (102a, 102b) une même fréquence de résonance comportent au moins :
    - deux amplificateurs (202a, 202b) dont des entrées sont reliées à des sorties du premier et du deuxième capteurs résonants (102a, 102b), et
    - un circuit déphaseur (204) dont une entrée est reliée à une sortie d'un des deux amplificateurs (202a) et dont une sortie est reliée à des entrées du premier et du deuxième capteurs résonants (102a, 102b),
    ou dans lequel les moyens aptes à imposer au premier et au deuxième capteurs résonants (102a, 102b) une même fréquence de résonance comportent au moins :
    - un amplificateur différentiel (302) comportant une entrée non inverseuse reliée à une sortie du premier capteur résonant (102a), une entrée inverseuse reliée à une sortie du deuxième capteur résonant (102b), une sortie inverseuse reliée à une entrée du premier capteur résonant (102a), et une sortie non inverseuse reliée à une entrée du deuxième capteur résonant (102b), et
    - une première capacité (304a) reliée à la sortie inverseuse de l'amplificateur différentiel (302), et une deuxième capacité (304b) reliée à la sortie non inverseuse de l'amplificateur différentiel (302),
    et, lorsque les moyens aptes à imposer au premier et au deuxième capteurs résonants (102a, 102b) une même fréquence de résonance comportent lesdits deux amplificateurs (202a, 202b) et ledit circuit déphaseur (204), les moyens de mesure (108) du déphasage entre les signaux de sortie du premier et du deuxième capteurs résonants (102a, 102b) sont aptes à mesurer un déphasage entre des signaux délivrés sur les sorties des deux amplificateurs (202a, 202b).

2. Dispositif de mesure (200 - 400) selon la revendication 1, dans lequel le premier et/ou le deuxième capteurs résonants (102a, 102b) sont de type NEMS et/ou MEMS.

3. Dispositif de mesure (200 - 400) selon l'une des revendications précédentes, dans lequel la variable physique destinée à être mesurée correspond à une masse, une température, une accélération ou une pression.

4. Dispositif de mesure (200) selon l'une des revendications précédentes, comportant en outre des moyens (110) de calcul d'une variation de ladite variable physique à partir du déphasage mesuré.

5. Dispositif de mesure (300, 400) selon l'une des revendications précédentes, comportant en outre des moyens de calcul d'une variation de la variable physique à partir d'une différence entre les valeurs de tensions d'alimentation des capteurs résonants (102a, 102b).

6. Dispositif de mesure (400) selon la revendication 5, comportant en outre des moyens (402, 404, 406) aptes à alimenter électriquement l'un des deux capteurs résonants (102b) par un signal d'alimentation dont la valeur est fonction de la valeur d'un signal d'alimentation de l'autre des deux capteurs résonants (102a) et du déphasage entre les signaux de sortie du premier et du deuxième capteurs résonants (102a, 102b).

7. Dispositif de mesure (200 - 300) selon l'une des revendications précédentes, dans lequel les moyens de mesure du déphasage entre les signaux de sortie du premier et du deuxième capteurs résonants (102a, 102b) comportent au moins un comparateur de phases (108).

8. Procédé de mesure d'une variation d'au moins une variable physique, comportant au moins les étapes de :

- mise en oscillation, à une même fréquence de résonance, d'un premier et d'un deuxième capteurs résonants (102a, 102b), l'un des deux capteurs résonants (102b) étant sensible à une variation de la variable physique à mesurer et l'autre des deux capteurs résonants (102a) n'étant pas sensible à une variation de la variable physique à mesurer,
- mesure d'un déphasage entre des signaux de sortie du premier et du deuxième capteurs résonants (102a, 102b),
et dans lequel la mise en oscillation, à une même fréquence de résonance, du premier et du deuxième capteurs résonants (102a, 102b) est obtenue :
- en appliquant en entrée du premier et du deuxième capteurs résonants (102a, 102b) un même signal délivré par une boucle de contre-réaction réalisée avec le premier ou le deuxième capteur résonant (102a, 102b), ou
- en appliquant en entrée de chacun du premier et du deuxième capteur résonant (102a, 102b) un signal délivré par une boucle de contre-réaction réalisée avec chacun du premier et du deuxième capteur résonant (102a, 102b) respectivement et un amplificateur différentiel (302) recevant en entrée les signaux de sortie du premier et du deuxième capteurs résonants (102a, 102b).

FIG.1

FIG.2

FIG.3

FIG.4

FIG.5

FIG.6

Europäisches
Patentamt

European
Patent Office

Office européen
des brevets

**RAPPORT DE RECHERCHE EUROPEENNE**

Numéro de la demande

EP 13 15 2386

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 4 361 026 A (MULLER RICHARD S ET AL) 30 novembre 1982 (1982-11-30) * le document en entier * ----- | 1-8 | INV. G01D3/036 G01L9/00 |
| A | WO 2004/044672 A2 (UNIV NEW YORK STATE RES FOUND [US]; GAMBINO RICHARD [US]; LONGTIN JON) 27 mai 2004 (2004-05-27) * le document en entier * * page 1, ligne 15 - ligne 23 * * page 7, ligne 22 - page 13, ligne 18; figure 9 * ----- | 1-8 | |
| A | DE 10 2010 022425 A1 (MARQUARDT MECHATRONIK GMBH [DE]) 9 décembre 2010 (2010-12-09) * alinéa [0020] - alinéa [0023]; figure 2 * ----- | 1-8 | |
| A | EP 0 101 669 A2 (ASULAB SA [CH]) 29 février 1984 (1984-02-29) * abrégé * ----- | 1-8 | |

| DOMAINES TECHNIQUES RECHERCHES (IPC) |
|---|
| G01N G01D G01L |

Le présent rapport a été établi pour toutes les revendications

| Lieu de la recherche | Date d'achèvement de la recherche | Examinateur |
|---|---|---|
| La Haye | 19 février 2013 | Amroun, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
                        
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 15 2386

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-02-2013

| Document brevet cité au rapport de recherche | | Date de publication | Membre(s) de la famille de brevet(s) | | Date de publication |
|---|---|---|---|---|---|
| US 4361026 | A | 30-11-1982 | AUCUN | | |
| WO 2004044672 | A2 | 27-05-2004 | AU | 2003301935 A1 | 03-06-2004 |
| | | | EP | 1573484 A2 | 14-09-2005 |
| | | | WO | 2004044672 A2 | 27-05-2004 |
| DE 102010022425 | A1 | 09-12-2010 | AUCUN | | |
| EP 0101669 | A2 | 29-02-1984 | EP | 0101669 A2 | 29-02-1984 |
| | | | FR | 2532047 A1 | 24-02-1984 |
| | | | JP | 59054916 A | 29-03-1984 |

EPO FORM P0460

Pour tout renseignement concernant cette annexe : voir Journal Officiel de l'Office européen des brevets, No.12/82